# EUROPÄISCHE PATENTSCHRIFT

(11) **EP 1 841 193 B1**
(45) Veröffentlichungstag und Bekanntmachung des Hinweises auf die Patenterteilung: **10.09.2014**
(21) Anmeldenummer: 07104637.9
(22) Anmeldetag: 22.03.2007
(51) Int. Cl.: H04M 9/00

(54) **Tür-Sprechstation einer Hauskommunikationsanlage**
Door intercom for a domestic intercom facility
Poste de d'appartement d'une installation de communication à domicile

(30) Priorität: 30.03.2006 DE 202006005120 U
(43) Veröffentlichungstag der Anmeldung: 03.10.2007
(73) Patentinhaber: GIRA Giersiepen GmbH & Co. KG, 42477 Radevormwald (DE)
(72) Erfinder:
(74) Vertreter: Patentanwälte Dr. Solf & Zapf

(56) Entgegenhaltungen:
- DE-B3-102004 020 312
- DE-B3-102004 020 315
- DE-U1- 20 110 588
- GB-A- 389 670

## Beschreibung

Die vorliegende Erfindung betrifft eine Tür-Sprechstation für eine Hauskommunikationsanlage, mit einem Gerätegehäuse, einer äußeren Abdeckung und einem in dem Gerätegehäuse unter der Abdeckung in einer Aufnahme angeordneten Mikrofon.

Solche Geräte werden häufig im Außenbereich von Gebäuden, insbesondere im Eingangsbereich neben oder vor einer Haustür, installiert. Dies ist vor allem bei Türstationen von Hauskommunikationsanlagen der Fall. Dabei könnte es witterungsbedingt, z. B. bei starken Regenfällen, zu Spritzwasser-Beaufschlagungen kommen. Das zur Audio-Sprachkommunikation vorhandene Mikrofon benötigt mindestens eine Gehäuse-Schallöffnung, durch die in ungünstigen Fällen Spritzwasser in den Bereich des Mikrofons und gegebenenfalls von dort aus noch weiter in das Gehäuse eindringen könnte.

Der vorliegenden Erfindung liegt die Aufgabe zugrunde, eine Tür-Sprechstation der genannten Art zu schaffen, bei dem ein Eindringen von Spritzwasser und daraus resultierende Folgeschäden mit hoher Sicherheit vermieden werden.

Erfindungsgemäß wird dies durch die Merkmale des Anspruchs 1 erreicht. Vorteilhafte Ausgestaltungsmerkmale der Erfindung sind Gegenstand der abhängigen Ansprüche.

Erfindungsgemäß weist demnach die Geräte-Abdeckung eine Schallöffnung auf, die - in einem bestimmungsgemäßen Montagezustand des Gerätes gesehen - gegenüber der Mikrofon-Aufnahme nach unten versetzt angeordnet ist. Umgekehrt bedeutet dies, dass der Bereich des Mikrofons gegenüber der Schallöffnung nach oben versetzt ist. Dabei ist zwischen der Schallöffnung und dem Bereich des Mikrofons ein vertikal oder gegebenenfalls auch schräg zur Vertikalen nach oben verlaufender Schallkanal vorgesehen. Dadurch kann Spritzwasser zwar durch die Schallöffnung, nicht aber nach oben in den Bereich des Mikrofons gelangen, weil es schwerkraftbedingt stets nach unten wieder abläuft. Dazu ist es vorteilhaft, wenn zwischen der Abdeckung und einem damit verbundenen Gehäuseteil eine den Bereich der Schallöffnung und des Schallkanals umschließende Dichtung angeordnet ist. Dadurch ist ein Eindringen von Spritzwasser in das Geräte-Innere praktisch ausgeschlossen; es kann nur wieder nach vorne aus der Schallöffnung ablaufen.

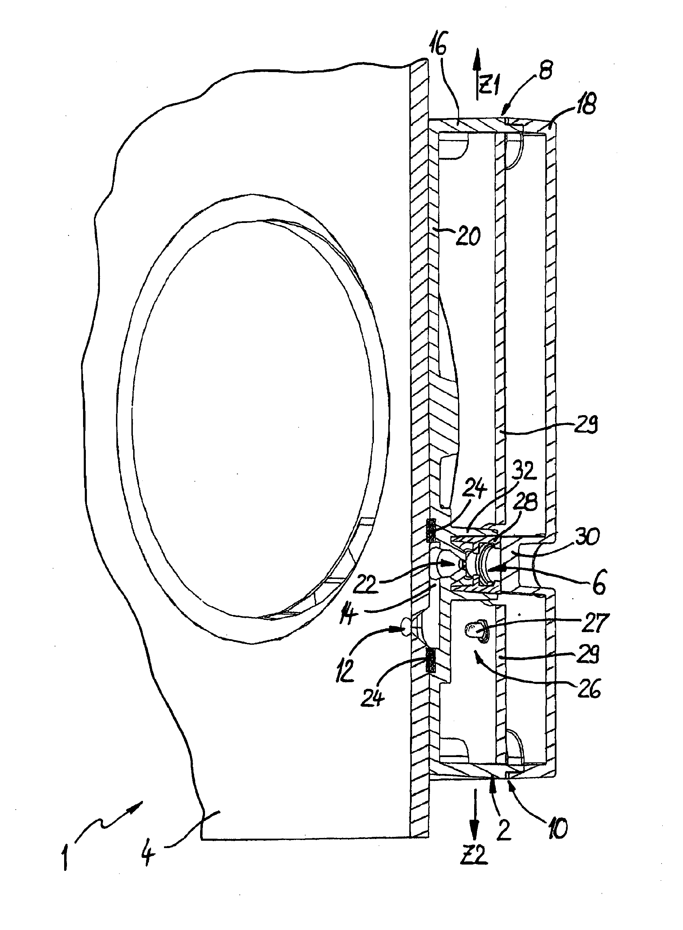

Anhand der Zeichnung soll die Erfindung beispielhaft genauer erläutert werden. Dabei zeigt die einzige Zeichnungsfigur eine aufgeschnittene Perspektivansicht schräg von vorne eines erfindungsgemäßen Gerätes in einer bevorzugten Ausgestaltung.

Ein erfindungsgemäßes Gerät 1 ist in der Zeichnung in einer Ausgestaltung als Tür-Sprechstation einer Hauskommunikationsanlage dargestellt. Das Gerät 1 weist ein Gerätegehäuse 2, eine äußere, plattenförmige Abdeckung 4 und ein in dem Gerätegehäuse 2 unter bzw. hinter der Abdeckung 4 angeordnetes Mikrofon auf, welches in der Zeichnung nicht dargestellt ist. Dargestellt ist allerdings eine Aufnahme 6 für das Mikrofon.

Das Gerät 1 ist in der Zeichnung in einem bestimmungsgemäßen Montagezustand dargestellt, wobei das Gerätegehäuse 2 derart in vertikaler Ausrichtung z. B. in Aufputz-Montage (AP) auf einer Wandfläche oder in Unterputz -Montage (UP) in einer in die Wand eingeputzten UP-Dose (nicht dargestellt) installiert wird, dass eine Oberseite 8 in Pfeilrichtung Z1 vertikal nach oben weist und eine Unterseite 10 in Pfeilrichtung Z2 vertikal nach unten.

Die Abdeckung 4 weist eine Schallöffnung 12 auf, die erfindungsgemäß - in dem dargestellten, bestimmungsgemäßen Montagezustand des Gerätes 1 - gegenüber dem Mikrofon (bzw. der Mikrofon-Aufnahme 6) bevorzugt vertikal nach unten versetzt angeordnet ist. Umgekehrt ausgedrückt bedeutet dies, dass der Bereich des Mikrofons gegenüber der Schallöffnung 12 nach oben versetzt angeordnet ist. Dabei ist zwischen der Schallöffnung 12 und dem Bereich des Mikrofons bzw. der Mikrofon-Aufnahme 6 ein vertikal oder gegebenenfalls auch schräg zur Vertikalen, aber jedenfalls nach oben verlaufender Schallkanal 14 vorgesehen.

Im dargestellten Beispiel ist das Gerätegehäuse 2 zweiteilig aus zwei Gehäuseteilen ausgebildet, einem ersten Gehäuseteil 16 und einem zweiten Gehäuseteil 18. Dabei weist das erste Gehäuseteil 16 eine im Wesentlichen ebene Gehäusewandung 20 auf, die parallel an der plattenförmigen Abdeckung 4 anliegt. Dabei ist der Schallkanal 14 durch eine Ausnehmung bzw. Vertiefung der Gehäusewandung 20 gebildet. Die Schallöffnung 12 der Abdeckung 4 mündet in den vertikal unteren Bereich des Schallkanals 14. Im vertikal oberen Bereich geht der Schallkanal 14 über eine sich trichterartig verengende Öffnung 22 der Gehäusewandung 20 in die Mikrofon-Aufnahme 6 des Gehäuseteils 16 über. Auch die trichterförmige Ausgestaltung der Öffnung 22 trägt zu einem sehr sicheren Spritzwasserschutz bei.

Wie weiterhin dargestellt ist, ist die Schallöffnung 12 von einem einzelnen Durchgangsloch der Abdeckung 4 gebildet. Es kann sich aber auch um eine Gruppenanordnung von mehreren Durchgangslöchern handeln. Es ist weiterhin vorteilhaft, wenn zwischen der Abdeckung 4 und der Gehäusewandung 20 des Gehäuseteils 16 eine den Bereich der Schallöffnung 12 und des Schallkanals 14 umschließende Dichtung 24 angeordnet ist.

In weiterer vorteilhafter Ausgestaltung der Erfindung - ggf. aber auch alternativ dazu - ist die Schallöffnung 12 von innen, d. h. von der Seite des Gerätegehäuses 2 aus beleuchtbar. Dazu ist das Gehäuseteil 16 zumindest in einem die Schallöffnung 12 innen überdeckenden Bereich der Gehäusewandung 20 transluzent oder transparent ausgebildet. Dabei ist innerhalb des Gerätegehäuses 2 in einem Bereich 26 eine Lichtquelle 27 derart untergebracht, dass ihr Licht über das transluzente bzw. transparente Gehäuseteil 16/20 den Bereich der Schallöffnung 12 von innen beleuchtet. Dabei kann mit Vorteil die Lichtquelle 27 in Abhängigkeit vom jeweiligen Betriebszustand des Gerätes gesteuert werden (Status-Anzeige). Insbesondere kann ein aktivierter Zustand des Mikrofons optisch signalisiert werden. Wie dargestellt kann als Lichtquelle 27 (mindestens) eine LED vorgesehen und z. B. auf einer Leiterplatte 29 angeordnet sein.

Wie sich weiterhin aus der Zeichnung ergibt, ist mit Vorteil in der Mikrofon-Aufnahme 6 ein das Mikrofon mechanisch aufnehmender Halteeinsatz 28 angeordnet. Dabei ist das Mikrofon bzw. der Halteeinsatz 28 in der Aufnahme 6 zwischen einer Anlage auf der Seite des Schallkanals 14 bzw. der trichterartigen Öffnung 22 und einem gegenüberliegenden Halteansatz 30 des zweiten Gehäuseteils 18 fixiert gehalten. Der Halteeinsatz 28 wird von einem stegförmigen bzw. nicht zylindrischen Ansatz 32 des ersten Gehäuseteils 16 aufgenommen. Der Halteeinsatz 28 kann - wie in der Zeichnung angedeutet ist - innere Ansätze zur guten Fixierung des nicht dargestellten Mikrofons aufweisen.

## Patentansprüche

1. Tür-Sprechstation für eine Hauskommunikationsanlage, mit einem Gerätegehäuse (2), einer äußeren Abdeckung (4) und einem in dem Gerätegehäuse (2) hinter der Abdeckung (4) in einer Aufnahme (6) angeordneten Mikrofon, wobei die Abdeckung (4) eine Schallöffnung (12) aufweist, die - in einem bestimmungsgemäßen Montagezustand des Gerätes - gegenüber der Mikrofon-Aufnahme (6) nach unten versetzt angeordnet ist, wobei zwischen der Schallöffnung (12) und dem Bereich der Mikrofon-Aufnahme (6) ein Schallkanal (14) vorgesehen ist
**dadurch gekennzeichnet, dass** die Schallöffnung (12) von der Seite des Gerätegehäuses (2) aus beleuchtbar ist, wobei der Schallkanal (14) zwischen der plattenförmigen Abdeckung (4) und einer etwa parallel dazu liegenden Gehäusewandung (20) eines Gehäuseteils (16) gebildet ist, und wobei das Gehäuseteil (16) zumindest in einem der Schallöffnung (12) gegenüberliegenden Bereich der Gehäusewandung (20) transluzent ausgebildet ist, wobei innerhalb des Gerätegehäuses (2) eine Lichtquelle (27) untergebracht ist, deren Licht über die transluzente Gehäusewandung (20) den Bereich der Schallöffnung (12) beleuchtet..

2. Tür-Sprechstation nach Anspruch 1,
**dadurch gekennzeichnet, dass** der Schallkanal (14) über eine bevorzugt trichterförmige Öffnung (22) der Gehäusewandung (20) in die Mikrofon-Aufnahme (6) übergeht.

3. Tür-Sprechstation nach Anspruch 1 oder 2,
**dadurch gekennzeichnet, dass** die Schallöffnung (12) von mindestens einem Durchgangsloch der Abdeckung (4) gebildet ist.

4. Tür-Sprechstation nach einem der Ansprüche 1 bis 3,
**dadurch gekennzeichnet, dass** zwischen der Abdeckung (4) und dem Gehäuseteil (16) eine den Bereich der Schallöffnung (12) und des Schallkanals (14) umschließende Dichtung (24) angeordnet ist.

5. Tür-Sprechstation nach einem der Ansprüche 1 bis 4,
**dadurch gekennzeichnet, dass** in der Mikrofon-Aufnahme (6) ein das Mikrofon aufnehmender Halteeinsatz (28) angeordnet ist.

6. Tür-Sprechstation nach einem der Ansprüche 1 bis 5,
**dadurch gekennzeichnet, dass** das Mikrofon bzw. der Halteeinsatz (28) in der Aufnahme (6) zwischen der Seite des Schallkanals (14) und einem Halteansatz (30) eines zusätzlichen, zweiten Gehäuseteils (18) fixiert gehalten ist.

## Claims

1. A door intercommunication station for a domestic communication system, having an apparatus housing (2), an outer cover (4) and a microphone which is arranged behind the cover (4), in the apparatus housing (2), in a receiver (6), wherein the cover (4) has a sound opening (12) which - in the apparatus mounted as directed - is arranged displaced downwards with respect to the microphone receiver (6), wherein between the sound opening (12) and the region of the microphone receiver (6) there is provided a sound channel (14), **characterized in that** the sound opening (12) can be illuminated from the side of the apparatus housing (2), wherein the sound channel (14) is formed between the plate-shaped cover (4) and a housing wall (20), of a housing part (16), lying substantially parallel thereto, and wherein the housing part (16) is translucent in at least a region, opposite the sound opening (12), of the housing wall (20), wherein a light source (27) is housed within the apparatus housing (2) and its light illuminates the region of the sound opening (12) via the translucent housing wall (20).

2. A door intercommunication station according to claim 1, **characterized in that** the sound channel (14) becomes the microphone receiver (6) via a preferably funnel-shaped opening (22) of the housing wall (20).

3. A door intercommunication station according to claim 1 or 2, **characterized in that** the sound opening (12) is formed by at least one through hole of the cover (4).

4. A door intercommunication station according to any one of claims 1 to 3, **characterized in that** a seal (24) enclosing the region of the sound opening (12) and the sound channel (14) is arranged between the cover (4) and the housing part (16).

5. A door intercommunication station according to any one of claims 1 to 4, **characterized in that** a holding insert (28) receiving the microphone is arranged in the microphone receiver (6).

6. A door intercommunication station according to any one of claims 1 to 5, **characterized in that** the microphone or the holding insert (28) is held in a fixed manner in the receiver (6) so as to be between the side of the sound channel (14) and a holding attachment (30) of an additional, second housing part (18).

## Revendications

1. Interphone d'une installation de communication à domicile, avec un boîtier d'appareil (2), un recouvrement extérieur (4) et un microphone disposé dans le boîtier d'appareil (2) derrière le recouvrement (4) dans un logement (6), le recouvrement (4) présentant une ouverture de passage du son (12) qui est disposée en déport vers le bas dans un état de montage de l'appareil par rapport au logement de microphone (6), un canal de son (14) étant prévu entre l'ouverture de passage du son (12) et la zone du logement de microphone (6), **caractérisé en ce que** l'ouverture de passage du son (12) peut être éclairée depuis le côté du boîtier d'appareil (2), le canal de son (14) étant formé entre le recouvrement en forme de plaque (4) et une paroi de boîtier (20) se trouvant à peu près parallèlement à celui-ci d'une partie de boîtier (16), et la partie de boîtier (16) étant réalisée de manière translucide au moins dans une zone en regard de l'ouverture de passage du son (12) de la paroi de boîtier (20), une source de lumière (27) étant logée dans le boîtier d'appareil (2), dont la lumière éclaire par la paroi de boîtier translucide (20) la zone de l'ouverture de passage du son (12).

2. Interphone selon la revendication 1, **caractérisé en ce que** le canal de son (14) passe par une ouverture (22) de préférence en forme d'entonnoir de la paroi de boîtier (20) dans le logement de microphone (6).

3. Interphone selon la revendication 1 ou 2, **caractérisé en ce que** l'ouverture de passage du son (12) est formée par au moins un trou de passage du recouvrement (4).

4. Interphone selon l'une quelconque des revendications 1 à 3, **caractérisé en ce qu'**une garniture (24) entourant la zone de l'ouverture de passage du son (12) et du canal de son (14) est disposée entre le recouvrement (4) et la partie de boîtier (16).

5. Interphone selon l'une quelconque des revendications 1 à 4, **caractérisé en ce qu'**un insert de retenue (28) logeant le microphone est disposé dans le logement de microphone (6).

6. Interphone selon l'une quelconque des revendications 1 à 5, **caractérisé en ce que** le microphone ou l'insert de retenue (28) est maintenu fixé dans le logement (6) entre le côté du canal de son (14) et une saillie de retenue (30) d'une seconde partie de boîtier (18) supplémentaire.
